# EUROPEAN PATENT APPLICATION

(11) **EP 4 439 792 A1**
(43) Date of publication of application: **02.10.2024**
(21) Application number: 23165660.4
(22) Date of filing: 30.03.2023
(51) Int. Cl.: H01M 10/613, H01M 10/6556, H01M 50/213

(54) **BATTERY CELL FIXTURE AND BATTERY CELL MODULE**

(71) Applicant: Röchling Automotive SE, 68165 Mannheim (DE)
(72) Inventor: Martini, Francesco, 68165 Mannheim (DE); Gusmerotti, Daniele, 68165 Mannheim (DE); Tremonti, Claudia, 39100 Bolzano (IT); Ganthaler, Christoph, 68165 Mannheim (DE)
(74) Representative: Ullrich & Naumann PartG mbB

(57) **Abstract**

A battery cell fixture (114) is disclosed, wherein a plurality of battery cells (112) are supportable by the battery cell fixture (114) in a predefined relative position to each other. The battery cell fixture (114) comprises: at least one frame base (116) having a plurality of fingers (118) extending up-wards from the frame base (116) in a parallel fashion; at least one frame top (120) having a plurality of hollow towers (122) extending upwards from the frame top (120) and covering the fingers (118) of the frame base (116); at least one coolant inlet (124) through which at least one coolant is admittable into the battery cell fixture (114); and at least one coolant outlet (126) through which the at least one coolant is re-leasable from the battery cell fixture (114); wherein in conjunction the frame base (116) and the frame top (120) form a plurality of cooling vanes (128) configured for guiding the at least one coolant through the battery cell fixture (114) from the coolant inlet (124) to the coolant outlet (126).

Further disclosed are a method for manufacturing a battery cell fixture (114), a battery module (110) and a method for manufacturing at least one battery module (110).

## Description

### Technical Field

The invention relates to a battery cell fixture and a method for manufacturing a battery cell fixture. Further, the invention relates to a battery cell module and a method for manufacturing a battery cell module. The devices and methods according to the present invention may generally be applied in the field of electrical power storage, such as in the field of electrical and/or electrochemical energy storage, e.g. as used in electrically powered entities. Specifically, the invention may be applied in the field of electro mobility, such as in fuel cell, hybrid and/or electric vehicles, e.g. in cars and/or trucks. Other applications however are feasible.

### Background art

Battery cell fixtures are generally used for structuring battery packs and module and/or for providing stability to batteries within the battery packs and/or battery modules. Typically, battery packs and modules comprise cooling means, such as battery cooling systems, for preventing battery packs and/or modules from overheating.

However, common battery cooling systems are provided as stand-alone components, e.g. manufactured independently from the components of battery packs and/or modules, that need to be mounted and/or fixed to the pack and/or module separately.

### Problem to be solved

It is therefore desirable to provide devices and methods, which address the above-mentioned shortcomings of known devices and methods. Specifically, a battery cell fixture, a method for manufacturing a battery cell fixture, a battery cell module and a method for manufacturing a battery cell module shall be proposed, which allow for a simple assembly and manufacturing, while at the same time providing an efficient cooling to prevent batteries from overheating.

### Summary

This problem is addressed by a battery cell fixture, a method for manufacturing a battery cell fixture, a battery cell module and a method for manufacturing a battery cell module with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a battery cell fixture is proposed, wherein a plurality of battery cells, specifically at least three battery cells, are supportable by the battery cell fixture in a predefined relative position to each other, for example in a staggered packaging. The battery cell fixture comprises at least one frame base having a plurality of fingers extending upwards from the frame base in a parallel fashion. Further, the battery cell fixture comprises at least one frame top having a plurality of hollow towers extending upwards from the frame top and covering the fingers of the frame base. The battery cell fixture further comprises at least one coolant inlet through which at least one coolant is admittable into the battery cell fixture and at least one coolant outlet through which the at least one coolant is releasable from the battery cell fixture. In conjunction the frame base and the frame top, such as at least partially by their interface, for example similar to a die formed by a two piece mold, form a plurality of cooling vanes configured for guiding the at least one coolant through the battery cell fixture from the coolant inlet to the coolant outlet.

The term "battery cell fixture" as used herein is a broad term and is to be given its ordinary and customary meaning to a person of ordinary skill in the art and is not to be limited to a special or customized meaning. The term specifically may refer, without limitation, to an element and/or object configured for providing structure and/or stability to one or more batteries, particularly in a battery pack and/or in a battery module. The battery cell fixture may specifically be configured for supporting and/or holding, e.g. mechanically fixating, for example within its fixture structure, a plurality of battery cells in a predefined relative position to each other, e.g. by at least partially encircling and/or enclosing each of the battery cells. In particular, a contour and/or form of the battery cell fixture, specifically of the frame top and/or of the frame base, may correspond to the contour and/or form of the battery cells that are supposed to be supported and/or held within the battery cell fixture. As an example, the battery cell fixture may be configured for providing support to the battery cells, similar to a dish basket supporting dishes in a dish washer.

The term "frame base" as used herein is a broad term and is to be given its ordinary and customary meaning to a person of ordinary skill in the art and is not to be limited to a special or customized meaning. The term specifically may refer, without limitation, to an arbitrary rack-like structure configured for providing stability and/or alignment for one or more objects placed in or on top of it. Specifically, the frame base may, e.g. by its lower part from which the fingers are extending upwards, provide a stiffness and/or rigidness to the battery cell fixture. In particular, the lower part of the frame base may be configured for connecting the fingers, such that an at least partially fluid tight layer, i.e. fluid tight in predefined regions of the frame base, may be created between an underside of the frame base and an upper side of the frame base on which the frame top, i.e. with the hollow towers, may be arranged and/or positioned.

The term "finger" as used herein is a broad term and is to be given its ordinary and customary meaning to a person of ordinary skill in the art and is not to be limited to a special or customized meaning. The term specifically may refer, without limitation, to an arbitrary elongated object extending from a part of the frame base, such as from a lower part of the frame base. In particular the finger may have one free end and one end which may be attached and/or connected to the lower part of the frame base. The attachment and/or connection of the fingers and the rest of the frame base may for example be made by a subsequent connection of individual parts or the fingers and the rest of the frame base may be integrally formed, for example in one manufacturing step, such as in a molding process. The fingers extend upwards from the frame base in a parallel fashion. As used herein, the term "in a parallel fashion" may specifically refer to a status of an alignment of at least two objects in such a way that an angle between the objects is 0° with a tolerance of ± 10°, specifically of ± 5°, more specifically of ± 2°, more specifically of ± 0,5°.

Further, the term "upwards" as used herein is a broad term and is to be given its ordinary and customary meaning to a person of ordinary skill in the art and is not to be limited to a special or customized meaning. The term specifically may refer, without limitation, to an indication of a direction from a ground towards a ceiling. As an example, the term "fingers extending upwards" does not limit the fingers, when the battery cell fixture is positioned in an upside-down position, to extend "downwards". In particular, the extension of the fingers upwards may particularly refer to the fingers all extending in the same direction from the lower part of the frame base. Thus, the fingers, i.e. the finger's free ends, may all be located on the same side of the lower part of the frame base, e.g. on the upper side of the frame base.

The term "frame top" as used herein is a broad term and is to be given its ordinary and customary meaning to a person of ordinary skill in the art and is not to be limited to a special or customized meaning. The term specifically may refer, without limitation, to an arbitrary covering structure configured for being placed on top of another object. Specifically, the frame top may be configured to be stacked on top of the frame base, thereby forming, e.g. by its hollow towers, a structure configured for at least partially encircling and/or enclosing the battery cell. In particular, a contour and/or form of the frame top, specifically an outer contour of its towers, may at least partially correspond to the contour and/or form of the battery cell that is supposed to be supported and/or held within the battery cell fixture.

The term "hollow tower" as used herein is a broad term and is to be given its ordinary and customary meaning to a person of ordinary skill in the art and is not to be limited to a hatlike structure extending from a part of the frame top, such as from a lower part of the frame top. In particular, the lower part of the frame top may be configured for connecting the hollow towers, such that a fluid tight layer may be positioned on top of the frame base.

As outlined above the term "upwards" as used herein may refer to an indication of a direction from a ground towards a ceiling. In conjunction with the "hollow towers", the term "extending upwards" may relate to an indication of the hollow towers extending from the frame top in the same direction as the fingers extend from the frame base. Thus, as an example, the hollow towers extending upwards from the frame top may in other words be referred to as the hollow towers extending in the same upwards direction from the frame top as the fingers extend from the frame base. As an example, the upwards extension of the hollow towers does not limit the towers, when the battery cell fixture is positioned in an upside-down position, to extend "downwards". In particular, the extension of the hollow towers upwards may refer to the towers all extending in the same direction from the lower part of the frame top. Thus, the towers may all be located on the same side of the lower part of the frame top, such that the fingers of the frame base may be covered completely by the towers of the frame top. As an example, the free ends of the fingers may be located closer to an upper end of the hollow towers of the frame top and the fixed ends of the fingers may be located closer to the lower part of the frame top. A further embodiment of the invention relates to a combination of the two configurations: one frame on the bottom comprising fingers extending upwards up to half height, and a frame on the top comprising fingers extending downwards until half height.

The term "covering the fingers" as used herein is a broad term and is to be given its ordinary and customary meaning to a person of ordinary skill in the art and is not to be limited to a special or customized meaning. The term specifically may refer, without limitation, to an arrangement in which the fingers of the frame base are encased and/or shielded in at least one direction, i.e. in the upwards direction. Thus, the towers covering the fingers may refer to an arrangement in which the fingers from at least one side and/or direction, for example from above, are encased and/or shielded by the hollow towers, for example within an inside of the hollow towers.

The term "coolant", also referred to as "cooling fluid", as used herein is a broad term and is to be given its ordinary and customary meaning to a person of ordinary skill in the art and is not to be limited to a special or customized meaning. The term specifically may refer, without limitation, to an arbitrary fluid configured for performing a heat compensation. In particular, the coolant may be or may comprise a heat conducting fluid, e.g. dissipating and/or transporting heat, for example by flowing, from one area to another area.

In particular, the coolant may be configured for cooling the battery cells supportable by the battery cells fixture. However, the cooling effect may also be inversed, i.e. allowing a heating instead of cooling of the battery cells. Thus, though the coolant is primarily described in connection with its purpose of cooling, it is explicitly also configured for heating, i.e. increasing a temperature, of the battery cells depending on an actual temperature of the battery cells in comparison to a preferred range of working temperature of the battery cells.

The term "coolant inlet" as used herein is a broad term and is to be given its ordinary and customary meaning to a person of ordinary skill in the art and is not to be limited to a special or customized meaning. The term specifically may refer, without limitation, to a filler and/or intake for a cooling fluid, such as to an entry. In particular, the coolant inlet may be an object and/or part through which the cooling fluid may enter into an arbitrary system and/or device, such as an entrance. The coolant inlet may be a separate part, such as an individual part connected to one or more of the frame top and the frame base. Additionally or alternatively, the coolant inlet may be integrated into one or more of the frame base and the frame top or may even be created by a conjunction of the frame base and the frame top. Further additionally or alternatively, the coolant inlet and one or more of the frame base and the frame top may be integrally formed, e.g. made in one piece.

The term "coolant outlet" as used herein is a broad term and is to be given its ordinary and customary meaning to a person of ordinary skill in the art and is not to be limited to a special or customized meaning. The term specifically may refer, without limitation, to an arbitrary object for releasing and/or exhausting a cooling fluid, such as to an exit. In particular, the coolant outlet may be an object and/or part through which the cooling fluid may exit, e.g. from an arbitrary system and/or device, such as an output. The coolant outlet may be a separate part, such as an individual part connected to one or more of the frame top and the frame base. Additionally or alternatively, the coolant outlet may be integrated into one or more of the frame base and the frame top or may even be created by a conjunction of the frame base and the frame top. Further additionally or alternatively, the coolant outlet and one or more of the frame base and the frame top may be integrally formed, e.g. made in one piece.

The term "cooling vanes" as used herein is a broad term and is to be given its ordinary and customary meaning to a person of ordinary skill in the art and is not to be limited to a special or customized meaning. The term specifically may refer, without limitation, to an arbitrary pipe-like system through which a coolant and/or cooling fluid may flow. In particular, the cooling vanes may be configured for guiding the cooling fluid through the battery cell fixture. The cooling vanes may specifically be formed by a conjunction of the frame base and the frame top, such as by their interface as formed by the surfaces of the frame base and the frame top facing each other. In conjunction the frame base and the frame top may form the cooling vanes, e.g. together, for example similar to a die formed by a two piece mold. In particular, the cooling vanes may be formed by a mating of the frame base and the frame top, e.g. by a combination of the frame top and the frame base working together. In particular, the fingers of the frame base may be positioned within the towers of the frame top, such that the fingers may divide a space within the towers into at least two sections, such as into one cooling vane for an upward coolant flow and one cooling vane for a downward coolant flow. As an example, the cooling vanes my be formed by the fingers being arranged with the inside of their respective towers thereby directing the flow of the coolant and/or the cooling fluid as follows: Firstly, the coolant may be forced to flow the length of the finger, such as starting on the finger's fixed end and flowing toward the free end of the finger, e.g. in the upward direction. Then, secondly, the upper end of the covering tower may redirect the coolant's flow such that the coolant may be flowing the length of the finger on another side of the finger, such as toward the finger's fixed end, for example in a downward direction. Then, thirdly, the lower parts of one or both of the frame base and the frame top may again redirect the coolant's flow, e.g. to another finger and tower.

At least one of the fingers may at least partially finish flushly with the inside of at least one of the towers, such as at least one of the hollow towers of the frame top, by which it is covered. Specifically, all of the fingers may at least partially finish flushly with the inside of the respective towers by which they are covered. In particular, the fingers may finish flushly with the covering tower in at least two lines, such as in at least two surfaces, for example in at least two opposing surfaces of the finger. Specifically, the finger may be flush with the tower on the sides, such as on the at least two opposing surfaces of the finger, so that the coolant is forced to flow all the way up to the top. The finger preferably allow at least one gap, such as a some millimeters gap, in order that the coolant can flow from one side to the other side of the tower, e.g. from one cooling vane formed by one side of the tower and one side of the finger, to another cooling vane formed by another side of the tower and another side of the finger.

The term "finishing flushly" as used herein is a broad term and is to be given its ordinary and customary meaning to a person of ordinary skill in the art and is not to be limited to a special or customized meaning. The term specifically may refer, without limitation, to a form of assembly by which two abutting surfaces align in a way that they are replicating their opposing contours. Thus, the at least one finger finishing flushly with the inside of the at least one tower covering the finger may refer to the surface of the at least one finger, specifically the side surfaces of the finger, replicating and aligning with the surface of the hollow tower covering that finger in such a way that the two surfaces, i.e. of the finger and the tower, contact along the expand of the finger, e.g. forming a seal stopping and/or limiting the passage of coolant.

However, a seal may also be possible. Thus, additionally or alternatively to the flush finish, the battery cell fixture may comprise at least one seal for stopping and/or limiting the passage of the coolant around the finger, but instead guiding the coolant long the length of the finger towards the finger's free end.

The battery cells may for example be cylindrical batter cells. As an example, due to their uniform surface, introducing cylindrical battery cells into the battery cells fixture may be independent from an angular positioning. Thus, the battery cells may preferably be cylindrical battery cells. However, other forms of battery cells are feasible. Specifically, the battery cells may be selected from the group consisting of: a cylindrical battery cell; a prismatic battery cell; a pouch battery cell.

As an example, a number of towers of the frame top may equal a number of fingers of the frame base. Thus, the battery cell fixture may comprise an equal number of towers and fingers.

At least one of the fingers may have a constant cross section along its extension. In particular, all of the fingers may have a constant cross section along their extension. The term "constant cross section along its extension" as used herein is a broad term and is to be given its ordinary and customary meaning to a person of ordinary skill in the art and is not to be limited to a special or customized meaning. The term specifically may refer, without limitation, to an unchanging shape of an object in at least one direction. The constant cross section of the finger along the finger's extension may specifically refer to the shape, e.g. the cross section, of the finger to be unchanging along an axis following the finger's extension from the finger's fixed end towards the finger's free end.

Alternatively, at least one of the fingers may have a tapering cross section in the direction of its extension. As an example, all of the fingers may have a tapering cross section in the direction of their extension. The term "tapering cross section in the direction of its extension" as used herein is a broad term and is to be given its ordinary and customary meaning to a person of ordinary skill in the art and is not to be limited to a special or customized meaning. The term specifically may refer, without limitation, to a shape of an object becoming narrower and/or smaller in size in at least one direction. The tapering cross section of the finger in the direction of the finger's extension may specifically refer to a gradually reduction of a size of the shape, e.g. of the cross section, of the finger along an axis following the finger's extension from the finger's fixed end towards the finger's free end.

As an example, the cross section of at least one of the fingers, specifically of all of the fingers, may comprise a shape selected from the group consisting of: a ring segment; a rectangle, a square; a triangle; a freeform; a cross.

One or both of the frame base and the frame top may specifically have a repeating structure. The term "repeating structure" as used herein is a broad term and is to be given its ordinary and customary meaning to person of ordinary skill in the art and is not to be limited to a special or customized meaning. The term specifically may refer, without limitation, to a shape and/or form of an object comprising a reoccurring construction, for example in a predefined pattern. As an example, the frame base and/or the frame top may have a shape and/or form, which reoccurs within the frame base and/or the frame top, such as a repeating occurrence of a shape of a unit and/or cell. In particular, one or both of the frame base and the frame top, e.g. by having a repeating structure, may comprise a plurality of smaller units and/or cells having a form and/or shape, which repeatedly occurs within the respective frame base and/or the frame top.

One or both of the frame base and the frame top may comprise at least one part of a clip joint, such that the battery cell fixture may be connectable to at least one other component via the clip joint. For example, one or both of the frame base and the frame top may comprise at least one female or male part of a clip joint, such that via the clip joint the frame base and/or the frame top, and thus also the whole battery cell fixture, may be connectable to another component, such as to another frame base and/or frame top, e.g. to another battery cell fixture.

The term "clip joint" as used herein is a broad term and is to be given its ordinary and customary meaning to person of ordinary skill in the art and is not to be limited to a special or customized meaning. The term specifically may refer, without limitation, to a mechanism comprising at least one engaging member and at least one retaining member, e.g. the male part and the female part, wherein the mechanism is configured for establishing a force transmittable connection, when the engaging member and the retaining member engage each other, i.e. by being pushed together. For example, the force transmittable connection may be established by the clip joint by snapping and/or closing the engaging member into the retaining member, e.g. by pushing them together.

The frame base, specifically at least in a top plane view, may have a repeating hexagonal shape. Specifically, the frame base may have a repeating shape adjusted to an outer shape and/or contour of the battery cell.

At least one of the hollow towers, preferably all of the hollow towers, may have a constant wall thickness or an expanding wall thickness in the direction of its extension. Thus, at least one of the hollow towers may have a constant wall thickness in the direction of or along its extension. In particular, all of the hollow towers may have a constant wall thickness in the direction of or along its extension. The term "constant wall thickness in the direction of its extension" as used herein is a broad term and is to be given its ordinary and customary meaning to a person of ordinary skill in the art and is not to be limited to a special or customized meaning. The term specifically may refer, without limitation, to an unchanging thickness of an object's wall in at least one direction. The constant wall thickness of the tower in the direction of the tower's extension may specifically refer to the wall thickness of the tower to be unchanging along an axis following the tower's extension from the tower's lower end towards the tower's upper end.

Alternatively, at least one of the towers may have an expanding wall thickness in the direction of its extension. As an example, all of the towers may have an expanding wall thickness in the direction of their extension. The term "expanding wall thickness in the direction of its extension" as used herein is a broad term and is to be given its ordinary and customary meaning to a person of ordinary skill in the art and is not to be limited to a special or customized meaning. The term specifically may refer, without limitation, to a wall thickness of an object becoming broader and/or bigger in size in at least one direction. The expanding wall thickness of the tower in the direction of the tower's extension may specifically refer to a gradual increase of the wall thickness of the tower along an axis following the tower's extension from the tower's lower end towards the tower's upper end.

An outer contour of a cross section of at least one of the hollow towers may have a constant shape along its extension. Specifically, the outer contour of all of the hollow towers may have a constant shape along the hollow tower's extension, such from the tower's lower end towards the tower's upper end. As an example, the outer contour of the cross section may comprise a shape selected from the group consisting of: a triangle having concave sides; a triangle having at least one straight side and at least one concave side; a triangle having only straight sides; a shape that is at least partially adapted to an outer shape and/or contour of the battery cell. In particular, the outer contour of the tower's cross section may be adapted to the outer shape and/or the contour of the battery cell and/or to a contour of a neighboring component, e.g. arranged next to the battery cell fixture in a battery module or a battery pack.

As an example, in case the battery cells supportable by the battery cell fixture are cylindrical battery cells, the outer contour of the at least one tower's cross section may be or may comprise a negative form of the battery's cylinder form, for example a concave surface. In particular, in case the plurality of battery cells supportable by the battery cell fixture are cylindrical battery cells, the hollow towers may have a plurality of concave surfaces, i.e. have a cross section with a plurality of concave sides, such as a triangle and/or square having a plurality of concave sides, specifically at least two concave sides, more specifically at least three concave sides.

The frame base and the frame top may be joined mechanically and/or materially. The mechanical and/or material joining of the frame base and the frame top may specifically be or may comprise one or more of a mechanical connection and a material-based connection, e.g. by mechanically assembling and/or welding the frame top onto the frame base.

The frame base may for example comprise at least one material selected from the group consisting of: a plastic material, e.g. a plastic material with thermally conductive fillers and/or additives; a thermoplastic material, such as a Polypropylene material (PP) and/or a Polyamide (PA); a thermosetting material; an elastomer; a combination of one or more of the previously listed materials, such as a thermoplastic elastomer; a graphite; a metal, specifically a weldable metal, for example steel, aluminum, copper and one or more of their alloys. The material of the frame base may further comprise at least one thermally conductive filler material and/or additive. As an example, the thermally conductive filler material and/or additive of the frame base's material may be selected from the group consisting of: a carbon based filler; a ceramic based filler; a metal based filler, specifically an Aluminum Oxide based filler, a Boron Nitride based filler; carbon fibers, chopped carbon fibers, carbon nanotubes; graphene; a ceramic filler, a metallic filler, aluminum fibers, a mineral filler.

The frame top may for example comprise at least one material selected from the group consisting of: a plastic material, e.g. a plastic material with thermally conductive fillers and/or additives; a thermoplastic material, such as a Polypropylene material (PP) and/or a Polyamide (PA); a thermosetting material; an elastomer; a combination of one or more of the previously listed materials, such as a thermoplastic elastomer. The material of the frame top may further comprise at least one thermally conductive filler material and/or additive. As an example, the thermally conductive filler material and/or additive may be selected from the group consisting of: a carbon based filler; a ceramic based filler; a metal based filler, specifically an Aluminum Oxide based filler, a Boron Nitride based filler; carbon fibers, chopped carbon fibers, carbon nanotubes; graphene; a ceramic filler, a metallic filler, aluminum fibers, a mineral filler.

The coolant inlet and the coolant outlet may be integrally formed by the frame base and the frame top. Thus, as an example, the coolant inlet and the coolant outlet, instead of being separate parts, may be part of one or more of the frame base and the frame top. Specifically, the coolant inlet and the coolant outlet may be formed by the frame base and the frame top in conjunction. This can be realized by integration completely in the top, i.e. the frame top, completely in the bottom, i.e. the frame base, or by joining the two shells, i.e. the frame base and the frame top.

The coolant inlet and the coolant outlet may for example be arranged on opposing sides of the battery cell fixture. Thus, the coolant inlet and the coolant outlet may be arranged such that the coolant may enter the battery cell fixture on one side of the battery cell fixture and exits the battery cell fixture on an opposing side of the battery cell fixture. However, other arrangements, wherein the coolant inlet and the coolant outlet are arranged on the same side of the battery cell fixture are also feasible.

The battery cell fixture may specifically comprise a plurality of coolant inlets and a plurality of coolant outlets. For example, a plurality of coolant inlets and coolant outlets may increase a cooling efficiency of the battery cell fixture. As an example, the plurality of coolant inlets and coolant outlets may all feed into the same plurality of cooling vanes, such that the coolant admitted into the battery cell fixture via the different coolant inlets may mix within the battery cell fixture before exiting the battery cell fixture via the coolant outlets. Alternatively however, the plurality of coolant inlets and coolant outlets may feed into separate cooling vanes, such that the coolant admitted into the battery cell fixture via the different coolant inlets may stay separate. As an example, a number of cooling inlets may equal a number of cooling outlets. Thus, the battery cell fixture may comprise an equal number of cooling inlets and cooling outlets.

In a further aspect of the present invention, a method is proposed for manufacturing a battery cell fixture as described herein. The method may also be referred to as battery cell fixture manufacturing method. The method comprises the following steps, which may specifically be performed in the given order. Still, a different order is possible. The method may comprise additional steps, which are not mentioned. It is further possible to perform one or more than one or even all method steps repeatedly. Further, two or more of the method steps may be performed simultaneously or in a timely overlapping fashion.

The battery cell fixture manufacturing method comprises:
a) providing at least one frame base, wherein the frame base comprises at least one thermoplastic material, such as Polypropylene (PP) and/or Polyamide (PA);
b) providing at least one frame top, wherein the frame top comprises at least one thermoplastic material, such as a Polypropylene material (PP) and/or a Polyamide (PA);
c) joining the frame top onto the frame base such that the fingers of the frame base are covered by the towers of the frame top.

In step c), the joining may specifically be or may comprise a sealed joining, e.g. a leakage proof joining, such that the coolant may flow through the cooling vanes formed by the frame top and the frame base without leakage.

For possible definitions and options, reference may be made to the description of the battery cell fixture as given above or as further described below.

As an example, the joining in step c) may comprise a welding of the frame top onto the frame base such that the fingers of the frame base are covered by the towers of the frame top by using one or more welding processes selected from the group consisting of: a hot plate welding; a laser welding; an ultrasound welding; a hot gas welding; a vibration welding.

Additionally or alternatively, the joining in step c) may comprise a glueing of the frame top onto the frame base such that the fingers of the frame base are covered by the towers of the frame top by using one or more adhesive materials, such as at least one adhesive material suitable for adhesion to both materials of the frame top and of the frame bottom.

In a further aspect of the present invention, a battery module is proposed. The battery module comprises a plurality of battery cells and at least one battery cell fixture as described herein, wherein the plurality of battery cells are supported by the at least one battery cell fixture such that the battery cells are arranged in a predefined relative position to each other within the at least one battery cell fixture. For possible definitions and options, reference may be made to the description of the battery cell fixture as given above or as further described below.

The term "battery module" as used herein is a broad term and is to be given its ordinary and customary meaning to a person of ordinary skill in the art and is not to be limited to a special or customized meaning. The term specifically may refer, without limitation, to an assembly of multiple battery cells, specifically a predefined number of battery cells, combined into and supported by at least one battery cell fixture. In particular, the battery module may be a battery protecting and installable entity. As an example, the battery cells of the battery module may be selected from the group consisting of: a cylindrical battery cell a prismatic battery cell and a pouch battery cell.

In a further aspect of the present invention, a method is proposed for manufacturing at least one battery module as described herein. The method may also be referred to as battery module manufacturing method. The method comprises the following steps, which may specifically be performed in the given order. Still, a different order is possible. The method may comprise additional steps, which are not mentioned. It is further possible to perform one or more than one or even all method steps repeatedly. Further, two or more of the method steps may be performed simultaneously or in a timely overlapping fashion.

The battery module manufacturing method comprises:
i) providing at least one battery cell fixture as described herein;
ii) providing a plurality of battery cells;
iii) placing the battery cells in the battery cell fixture such that the battery cells are arranged in a predefined relative position to each other within the at least one battery cell fixture.

For possible definitions and options, reference may be made to the description of the battery cell fixture and to the battery module as given above or as further described below.

As an example, in step i), a plurality of battery fixtures, specifically at least two battery fixtures, may be provided and the battery module manufacturing method may further comprise:
iv) connecting at least two battery fixtures to each other by either clipping the battery fixtures together by a clip joint of the battery fixtures, or by joining the battery fixtures together by performing one or more joining processes selected from the group consisting of: a hot plate welding; a laser welding; an ultra-sound welding; a hot gas welding, a vibration welding; a glueing; specifically any process that allows to join the frame top and the frame base without leakage of the coolant.

Additionally or alternatively, step i) may comprise performing a method for manufacturing at least one battery fixture as outlined herein. Thus, for possible definitions and options, reference may be made to the description of the battery cell fixture manufacturing method as given above or as further described below.

The proposed battery cell fixture and battery module as well as their respective manufacturing methods provide a large number of advantages over known devices and methods of similar kind. In particular, the devices and methods according to the present application may allow for a more efficient cooling and/or heating of the battery cells. The proposed devices and methods may allow higher currents without overheating of the battery, e.g. without the battery getting locally too hot. Specifically, the more efficient compensation of the temperature of the battery cells may allow for a longer cycle life and an overall better performance of the battery and thus also of the battery module.

Further, the proposed battery cell fixture and battery module may, though providing a more efficient temperature compensation, still have a reduced number of components compared to known devices. In particular, the proposed methods and devices may allow for less individual parts, e.g. in the battery cell fixture and the battery module. This may specifically help reducing manufacturing costs and complexity of the assembly.

Summarizing and without excluding further possible embodiments, the following embodiments may be envisaged:
Embodiment 1: A battery cell fixture, wherein a plurality of battery cells, specifically at least three battery cells, are supportable by the battery cell fixture in a predefined relative position to each other, specifically in a staggered packaging, the battery cell fixture comprising:
   - at least one frame base having a plurality of fingers extending upwards from the frame base in a parallel fashion;
   - at least one frame top having a plurality of hollow towers extending upwards from the frame top and covering the fingers of the frame base,
   - at least one coolant inlet through which at least one coolant is admittable into the battery cell fixture;
   - at least one coolant outlet through which the at least one coolant is releasable from the battery cell fixture;
   wherein in conjunction the frame base and the frame top, such as at least partially by their interface, form a plurality of cooling vanes configured for guiding the at least one coolant through the battery cell fixture from the coolant inlet to the coolant outlet.
Embodiment 2: The battery cell fixture according to the preceding embodiment, wherein at least one of the fingers at least partially finishes flushly with the inside of at least one of the towers by which the finger is covered, specifically all of the fingers at least partially finish flushly with the inside of the respective towers by which they are covered.
Embodiment 3: The battery cell fixture according to any one of the preceding embodiments, wherein the battery cells are selected from the group consisting of: a cylindrical battery cell; a prismatic battery cell; a pouch battery cell.
Embodiment 4: The battery cell fixture according to any one of the preceding embodiments, wherein a number of towers of the frame top equals a number of fingers of the frame base.
Embodiment 5: The battery cell fixture according to any one of the preceding embodiments, wherein at least one of the fingers, preferably all of the fingers, has a constant cross section along its extension or a tapering cross section in the direction of its extension.
Embodiment 6: The battery cell fixture according to the preceding embodiment, wherein the cross section of at least one of the fingers, specifically of all of the fingers, comprises a shape selected from the group consisting of: a ring segment; a rectangle, a square; a triangle; a freeform; a cross.
Embodiment 7: The battery cell fixture according to any one of the preceding embodiments, wherein one or both of the frame base and the frame top has a repeating structure.
Embodiment 8: The battery cell fixture according to the preceding embodiment, wherein one or both of the frame base and the frame top comprise at least one part of a clip joint, for example at least one female or male part of a clip joint, such that the battery cell fixture is connectable to at least one other component, such as to another battery cell fixture, via the clip joint.
Embodiment 9: The battery cell fixture according to any one of the two preceding embodiment, wherein the frame base, specifically at least in a top plane view, has a repeating hexagonal shape.
Embodiment 10: The battery cell fixture according to any one of the preceding embodiments, wherein at least one of the hollow towers, preferably all of the hollow towers, has a constant wall thickness or an expanding wall thickness in the direction of its extension.
Embodiment 11: The battery cell fixture according to any one of the preceding embodiments, wherein an outer contour of a cross section of at least one of the hollow towers, specifically of all of the hollow towers, has a constant shape along its extension.
Embodiment 12: The battery cell fixture according to the preceding embodiment, wherein the outer contour of the cross section comprises a shape selected from the group consisting of: a triangle having concave sides; a triangle having at least one straight side and at least one concave side; a triangle having only straight sides; a shape that is at least partially adapted to an outer shape and/or contour of the battery cell, and/or to a contour of a neighboring component, e.g. arranged next to the battery cell fixture in a battery module or a battery pack.
Embodiment 13: The battery cell fixture according to any one of the preceding embodiments, wherein the frame base and the frame top are joined mechanically and/or materially, such as by one or more of a mechanical connection and a material-based connection, e.g. by mechanically assembling and/or welding the frame top onto the frame base.
Embodiment 14: The battery cell fixture according to any one of the preceding embodiments, wherein the frame base comprises at least one material selected from the group consisting of: a plastic material, e.g. a plastic material with thermally conductive fillers and/or additives; a thermoplastic material, such as a Polypropylene material (PP) and/or a Polyamide (PA); a thermosetting material; an elastomer; a combination of one or more of the previously listed materials, such as a thermoplastic elastomer; a graphite; a metal, specifically a weldable metal, for example steel, aluminum, copper and one or more of their alloys.
Embodiment 15: The battery cell fixture according to the preceding embodiment, wherein the material further comprises at least one thermally conductive filler material and/or additive, wherein the thermally conductive filler material and/or additive is selected from the group consisting of: a carbon based filler; a ceramic based filler; a metal based filler, specifically an Aluminum Oxide based filler, a Boron Nitride based filler; carbon fibers, chopped carbon fibers, carbon nanotubes; graphene; a ceramic filler, a metallic filler, aluminum fibers, a mineral filler
Embodiment 16: The battery cell fixture according to any one of the preceding embodiments, wherein the frame top comprises at least one material selected from the group consisting of: a plastic material, e.g. a plastic material with thermally conductive fillers and/or additives; a thermoplastic material, such as a Polypropylene material (PP) and/or a Polyamide (PA); a thermosetting material; an elastomer; a combination of one or more of the previously listed materials, such as a thermoplastic elastomer.
Embodiment 17: The battery cell fixture according to the preceding embodiment, wherein the material further comprises at least one thermally conductive filler material and/or additive, wherein the thermally conductive filler material and/or additive is selected from the group consisting of: a carbon based filler; a ceramic based filler; a metal based filler, specifically an Aluminum Oxide based filler, a Boron Nitride based filler; carbon fibers, chopped carbon fibers, carbon nanotubes; graphene; a ceramic filler, a metallic filler, aluminum fibers, a mineral filler.
Embodiment 18: The battery cell fixture according to any one of the preceding embodiments, wherein the coolant inlet and the coolant outlet are integrally formed by the frame base and the frame top, i.e. the coolant inlet and the coolant outlet are part of one or more of the frame base and the frame top, and/or by conjunction of the frame top and the frame base, specifically the coolant inlet and the coolant outlet are formed by the frame base and the frame top in conjunction.
Embodiment 19: The battery cell fixture according to any one of the preceding embodiments, wherein the coolant inlet and the coolant outlet are arranged on opposing sides of the battery cell fixture.
Embodiment 20: The battery cell fixture according to any one of the preceding embodiments, wherein the battery cell fixture comprises a plurality of coolant inlets and a plurality of coolant outlets.
Embodiment 21: The battery cell fixture according to the preceding embodiment, wherein a number of cooling inlets equals a number of cooling outlets.
Embodiment 22: A method for manufacturing a battery cell fixture according to any one of the preceding embodiments referring to a battery cell fixture, wherein the method comprises:
   a) providing at least one frame base, wherein the frame base comprises at least one thermoplastic material, such as Polypropylene (PP) and/or Polyamide (PA);
   b) providing at least one frame top, wherein the frame top comprises at least one thermoplastic material, such as Polypropylene (PP) and/or Polyamide (PA);
   c) joining the frame top onto the frame base such that the fingers of the frame base are covered by the towers of the frame top.
Embodiment 23: The method according to the preceding claim, wherein the joining in step c) comprises a welding of the frame top onto the frame base such that the fingers of the frame base are covered by the towers of the frame top by using one or more welding processes selected from the group consisting of: a hot plate welding; a laser welding; an ultrasound welding; a hot gas welding; a vibration welding.
Embodiment 24: The method according to any one of the two preceding claims, wherein the joining in step c) comprises a glueing of the frame top onto the frame base such that the fingers of the frame base are covered by the towers of the frame top by using one or more adhesive materials, such as at least one adhesive material suitable for adhesion to both materials of the frame top and of the frame bottom.
Embodiment 25: A battery module comprising a plurality of battery cells and at least one battery cell fixture according to any one of the preceding embodiments referring to a battery cell fixture, wherein the plurality of battery cells are supported by the at least one battery cell fixture such that the battery cells are arranged in a predefined relative position to each other within the at least one battery cell fixture.
Embodiment 26: The battery module according to the preceding embodiment, wherein the battery cells are selected from the group consisting of: a cylindrical battery cell, a prismatic battery cell and a pouch battery cell.
Embodiment 27: A method for manufacturing at least one battery module according to any one of the preceding embodiments referring to a battery module, wherein the method comprises
   i) providing at least one battery cell fixture according to any one of the preceding embodiments referring to a battery cell fixture;
   ii) providing a plurality of battery cells;
   iii) placing the battery cells in the battery cell fixture such that the battery cells are arranged in a predefined relative position to each other within the at least one battery cell fixture.
Embodiment 28: The method according to the preceding embodiment, wherein in step i) a plurality of battery fixtures, specifically at least two battery fixtures, are provided and wherein the method further comprises:
   iv) connecting at least two battery fixtures to each other by either clipping the battery fixtures together by a clip joint of the battery fixtures, or by joining the battery fixtures together by performing one or more joining processes selected from the group consisting of: a hot plate welding; a laser welding; an ultrasound welding; a hot gas welding; a vibration welding; a glueing; specifically any process that allows to join the frame top and the frame base without leakage of the coolant.
Embodiment 29: The method according to any one of the two preceding embodiments, wherein step i) comprises performing a method for manufacturing at least one battery fixture according to any one of the preceding embodiments referring to a method for manufacturing a battery fixture.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a battery module in a perspective view;
- Figures 2 and 3: show different embodiments of a battery cell fixture in a perspective view (Fig.2) and in a side view (Fig. 3);
- Figure 4: shows an embodiment of a battery module in a top plane view;
- Figures 5 and 6: show different embodiments of a battery cell fixture in exploded perspective views;
- Figures 7 and 8: show embodiments of different parts of a battery cell fixture in a perspective view (Fig. 7) and in a top plane view (Fig. 8);
- Figure 9: shows a part of a sectional view of an embodiment of a battery cell fixture;
- Figure 10: shows an embodiment of two connectable battery cell fixtures in a top plane view;
- Figures 11 and 12: show embodiments of a battery module comprising a plurality of connectable battery cell fixtures in top plane views;
- Figure 13: shows a flow chart of a method for manufacturing a battery cell fixture; and
- Figure 14 and 15: show different flow charts of a method for manufacturing a battery module.

### Detailed description of the embodiments

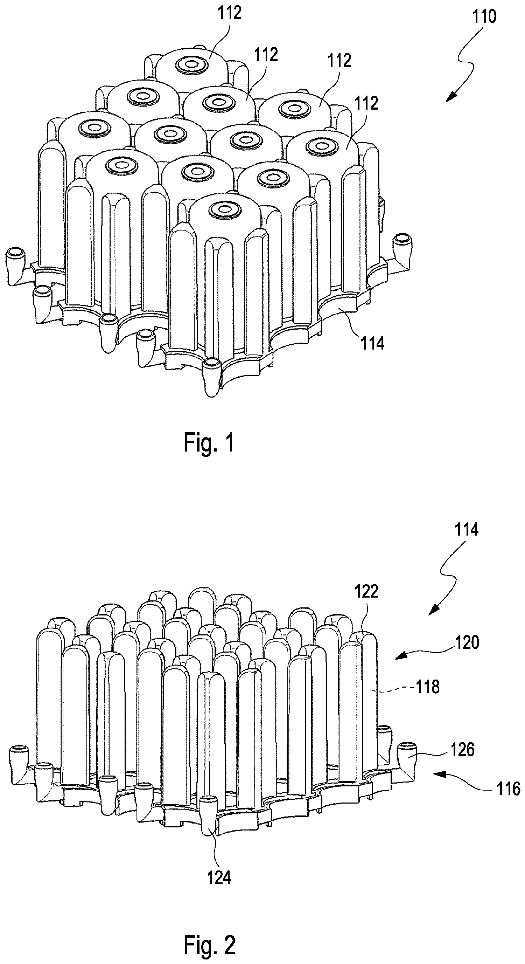

In Figure 1, an embodiment of a battery module 110 is illustrated in a perspective view. The battery module 110 comprises a plurality of battery cells 112 and at least one battery cell fixture 114, wherein the plurality of battery cells 112 are supported by the at least one battery cell fixture 114 such that the battery cells 112 are arranged in a predefined relative position to each other within the at least one battery cell fixture 114.

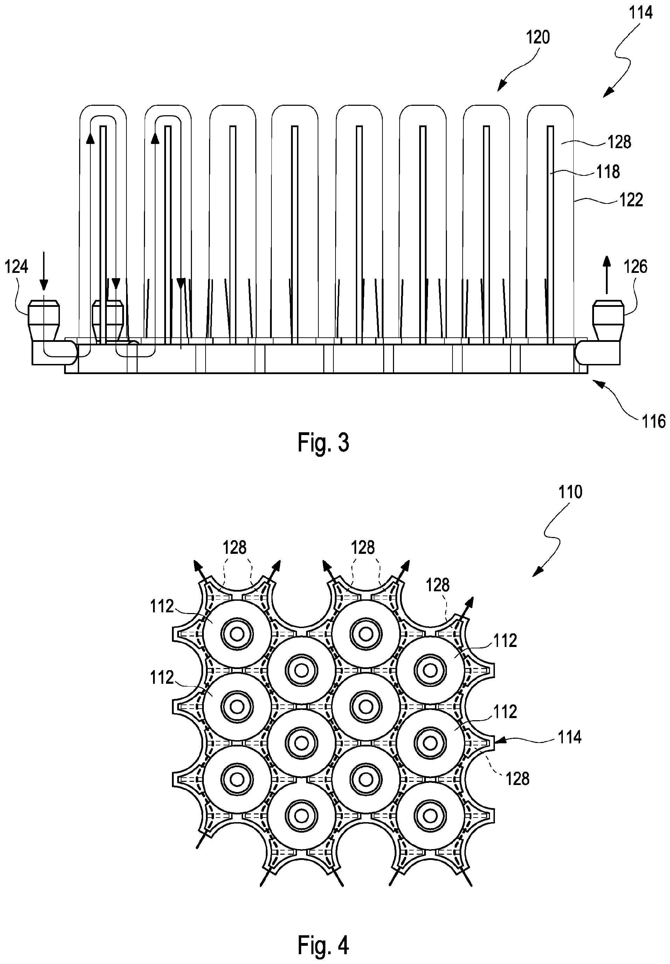

Figures 2 and 3 show different embodiments of a battery cell fixture 114 in a perspective view (Fig.2) and in a side view (Fig. 3). By the battery cell fixture 114 a plurality of battery cells 112, specifically at least three battery cells 112, are supportable in a predefined relative position to each other, specifically in a staggered packaging. The battery cell fixture 114 comprises:
- at least one frame base 116 having a plurality of fingers 118 extending upwards from the frame base 116 in a parallel fashion;
- at least one frame top 120 having a plurality of hollow towers 122 extending upwards from the frame top 120 and covering the fingers 118 of the frame base 116,
- at least one coolant inlet 124 through which at least one coolant is admittable into the battery cell fixture 114; and
- at least one coolant outlet 126 through which the at least one coolant is releasable from the battery cell fixture 114.

In conjunction, the frame base 116 and the frame top 120, such as at least partially by their interface, for example similar to a die formed by a two piece mold, form a plurality of cooling vanes 128 configured for guiding the at least one coolant through the battery cell fixture 114 from the coolant inlet 124 to the coolant outlet 126. In the first two fingers 118 and towers 122 on the left side of Figure 3, the flow of the coolant into the coolant inlet 124 and through the cooling vanes 128 is exemplarily illustrated by arrows.

Figure 4 shows an embodiment of a battery module 112 in a top plane view, wherein the coolant flow into the inlets 124, through the cooling vanes 128 and out through the coolant outlets 126 is illustrated by arrows.

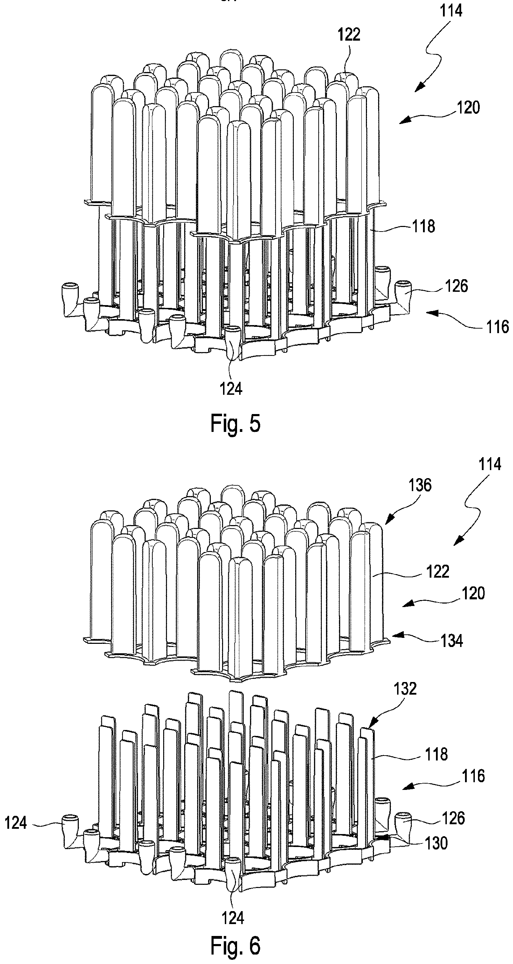

In Figures 5 and 6, different embodiments of a battery cell fixture 114 are illustrated in exploded perspective views. As an example, a number of towers 122 of the frame top 120 may equal a number of fingers 118 of the frame base 116, such that each finger 116 of the frame base 116 may be covered by exactly one tower 122 of the frame top 120. As an example, the frame base 116 and the frame top 120 may be joined mechanically and/or materially, such as by one or more of a mechanical connection and a material-based connection, e.g. by mechanically assembling and/or welding the frame top 120 onto the frame base 116.

At least one of the fingers 118, preferably all of the fingers 118, may have a constant cross section along its extension. Alternatively however, the at least one finger 118, preferably all of the fingers 118, may have a tapering cross section in the direction of its extension, such that in the upward direction, for example in the direction from a fixed end 130 of the finger 118 towards a free end 132 of the finger 118, a size of finger's cross section may gradually decrease.

At least one of the hollow towers 122, preferably all of the hollow towers 122, may have a constant wall thickness. Alternatively however, the at least one hollow tower 122, preferably all of the hollow towers 122, may have an expanding wall thickness in the direction of its extension, such that in the upward direction, for example from a lower end 134 where the hollow tower 122 is fixed to the frame top 120 towards an upper end 136 of the hollow tower 122, the wall thickness of the hollow tower may gradually increase. Further, an outer contour of a cross section of at least one of the hollow towers 122 may have a constant shape along its extension. Specifically, the outer contour of the cross section if the at least one hollow tower 122 may be adjusted to a shape and/or contour of the battery cell 112 supportable by and/or within the battery cell fixture 114.

The coolant inlet 124 and the coolant outlet 126 may be integrally formed by the frame base 116 and the frame top 120. Thus, the coolant inlet 124 and the coolant outlet 126 may be part of both the frame base 116 and the frame top 118, specifically by being formed by the frame base 116 and the frame top 120 in conjunction. This setup exemplarily illustrated in Figure 5. Alternatively however, the coolant inlet 124 and the coolant outlet 126 may be formed by only one of the frame base 116 and the frame top 120. As an example, the coolant inlet 124 and the coolant outlet 126 may be formed by the frame base 116, as exemplarily illustrated in Figure 6. Further additionally or alternatively, one or more of the coolant inlet 124 and the coolant outlet 126 may be separate parts configured to be connected to one or both of the frame base 116 and the frame top 120. As an example, the battery cell fixture 114 may comprise a plurality of coolant inlets 124 and a plurality of coolant outlets 126, wherein a number of coolant inlets 124 may specifically equal a number of cooling outlets 126.

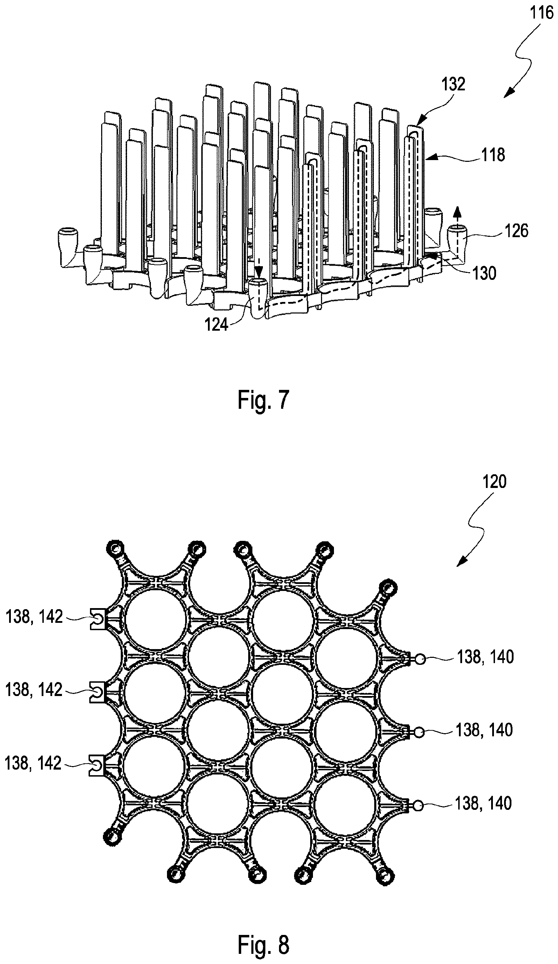

Figures 7 and 8 show embodiments of different parts of a battery cell fixture 114. Specifically, in Figure 7, an embodiment of a frame base 116 is illustrated in a perspective view and in Figure 8, an embodiment of a frame top 120 is illustrated in a top plane view.

The cross section of at least one of the fingers 118 may comprise a ring segment shape, as exemplarily illustrated in Figure 7. However, other shapes, such as a rectangle shape, e.g. exemplarily illustrated in Figure 6, a square shape, a triangle shape, a freeform shape and a cross shape are also feasible.

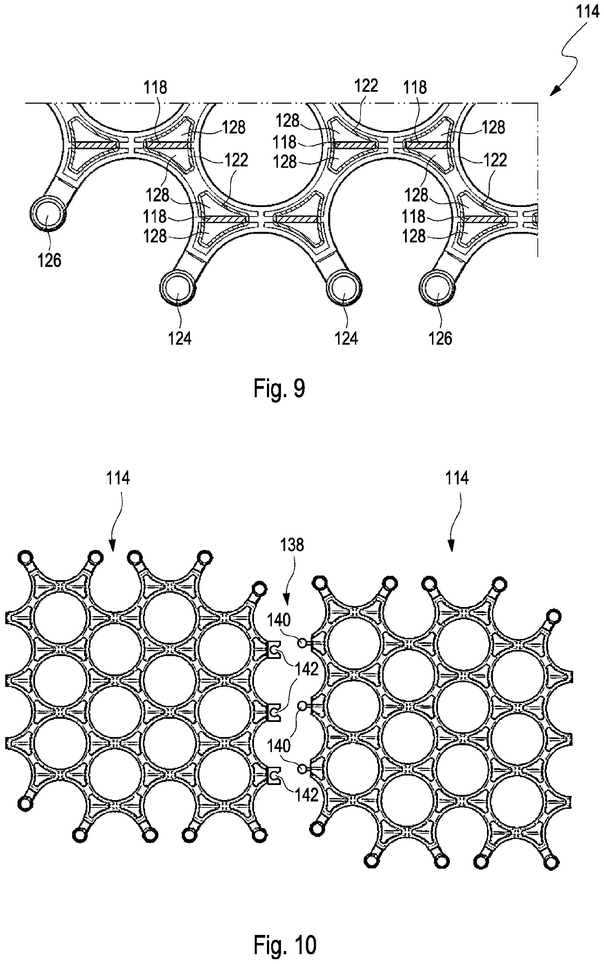

As an example, one or both of the frame base 116 and the frame top 120 may have a repeating structure. This structure may allow for an extendable set up of the battery cell fixture. For example, one or both of the frame base 116 and the frame top 120 may comprise at least one part of a clip joint 138, for example at least one male part 140 or a female part 142 of a clip joint 138, such that the battery cell fixture 114 may be connectable to at least one other component, e.g. to another battery cell fixture 114, via the clip joint 138. Such clip joints 138 are exemplarily illustrated in Figures 8 and 10, wherein Figure 10 shows an embodiment of two connectable, specifically via the clip joints 138, battery cell fixtures 114 in a top plane view.

Figure 9 shows a part of a sectional view of an embodiment of a battery cell fixture 114. As an example, at least one of the fingers 118 may at least partially finish flushly with the inside of at least one of the towers by which the finger 118 is covered. Specifically, all of the fingers 118 may at least partially finish flushly with the inside of the respective towers 122 by which they are covered.

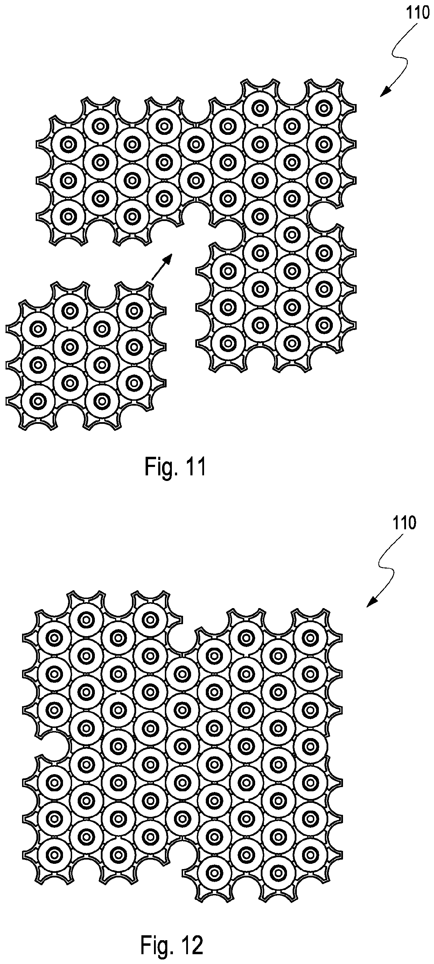

In Figures 11 and 12, embodiments of a battery module 110 comprising a plurality of connectable battery cell fixtures 114 are illustrated in top plane views. As an example, the plurality of battery cell fixtures 114 may be connected to each other via clip joints 138. Additionally or alternatively however, a connection between the battery cell fixtures 114 may be established by material joining, such as by welding.

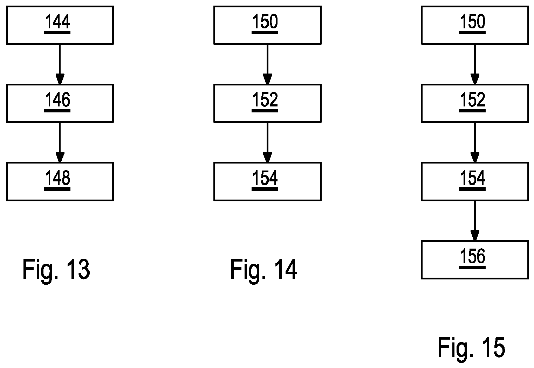

Figure 13 shows a flow chart of a method for manufacturing a battery cell fixture 114. The method comprises the following steps:
a) (denoted by reference number 144) providing at least one frame base 116, wherein the frame base 116 comprises at least one thermoplastic material, such as Polypropylene (PP) and/or Polyamide (PA);
b) (denoted by reference number 146) providing at least one frame top 120, wherein the frame top 120 comprises at least one thermoplastic material, such as Polypropylene (PP) and/or Polyamide (PA);
c) (denoted by reference number 148) joining the frame top 120 onto the frame base 116 such that the fingers 118 of the frame base 116 are covered by the towers 122 of the frame top 120.

Figure 14 and 15 show different flow charts of a method for manufacturing a battery module 110. The method comprises the following steps:
i) (denoted by reference number 150) providing at least one battery cell fixture 114 as disclosed herein;
ii) (denoted by reference number 152) providing a plurality of battery cells 112;
iii) (denoted by reference number 154) placing the battery cells 112 in the battery cell fixture 114 such that the battery cells 112 are arranged in a predefined relative position to each other within the at least one battery cell fixture 114.

As an example, in step i) a plurality of battery fixtures 114, specifically at least two battery fixtures 114, may be provided and wherein the method further comprises the following step:
iv) (denoted by reference number 156) connecting at least two battery fixtures 114 to each other by either clipping the battery fixtures 114 together by a clip joint 138 of the battery fixtures 114, or by joining the battery fixtures 114 together by performing one or more joining processes selected from the group consisting of: a hot plate welding; a laser welding; an ultrasound welding; a hot gas welding; a vibration welding; a glueing; specifically any process that allows to join the frame top and the frame base without leakage of the coolant.

### List of reference numbers

- 110: battery module
- 112: battery cell
- 114: battery cell fixture
- 116: frame base
- 118: finger
- 120: frame top
- 122: tower
- 124: coolant inlet
- 126: coolant outlet
- 128: cooling vane
- 130: fixed end
- 132: free end
- 134: lower end
- 136: upper end
- 138: clip joint
- 140: male part
- 142: female part
- 144: step a)
- 146: step b)
- 148: step c)
- 150: step i)
- 152: step ii)
- 154: step iii)
- 156: step iv)

## Claims

1. A battery cell fixture (114), wherein a plurality of battery cells (112) are supportable by the battery cell fixture (114) in a predefined relative position to each other, the battery cell fixture (114) comprising:
- at least one frame base (116) having a plurality of fingers (118) extending upwards from the frame base (116) in a parallel fashion;
- at least one frame top (120) having a plurality of hollow towers (122) extending upwards from the frame top (120) and covering the fingers (118) of the frame base (116);
- at least one coolant inlet (124) through which at least one coolant is admittable into the battery cell fixture (114);
- at least one coolant outlet (126) through which the at least one coolant is releasable from the battery cell fixture (114);
wherein in conjunction the frame base (116) and the frame top (120) form a plurality of cooling vanes (128) configured for guiding the at least one coolant through the battery cell fixture (114) from the coolant inlet (124) to the coolant outlet (126).

2. The battery cell fixture (114) according to the preceding claim, wherein at least one of the fingers (118) at least partially finishes flushly with the inside of at least one of the towers (122) by which the finger (118) is covered.

3. The battery cell fixture (114) according to any one of the preceding claims, wherein the battery cells (112) are selected from the group consisting of: a cylindrical battery cell; a prismatic battery cell; a pouch battery cell.

4. The battery cell fixture (114) according to any one of the preceding claims, wherein a number of towers (122) of the frame top (120) equals a number of fingers (118) of the frame base (116).

5. The battery cell fixture (114) according to any one of the preceding claims, wherein at least one of the fingers (118) has a constant cross section along its extension or a tapering cross section in the direction of its extension, wherein the cross section of at least one of the fingers (118) comprises a shape selected from the group consisting of: a ring segment; a rectangle, a square; a triangle; a freeform; a cross.

6. The battery cell fixture (114) according to any one of the preceding claims, wherein one or both of the frame base (116) and the frame top (120) has a repeating structure, wherein one or both of the frame base (116) and the frame top (120) comprise at least one part of a clip joint (138) such that the battery cell fixture (114) is connectable to at least one other component via the clip joint (138).

7. The battery cell fixture (114) according to any one of the preceding claims, wherein at least one of the hollow towers (122) has a constant wall thickness or an expanding wall thickness in the direction of its extension.

8. The battery cell fixture (114) according to any one of the preceding claims, wherein an outer contour of a cross section of at least one of the hollow towers (122) has a constant shape along its extension, wherein the outer contour of the cross section comprises a shape selected from the group consisting of: a triangle having concave sides; a triangle having at least one straight side and at least one concave side; a triangle having only straight sides.

9. The battery cell fixture (114) according to any one of the preceding claims, wherein the frame base (116) comprises at least one material selected from the group consisting of: a plastic material; a thermoplastic material; a Polypropylene (PP); a Polyamide (PA); a thermosetting material; an elastomer; a combination of one or more of the previously listed materials; a graphite; a metal.

10. The battery cell fixture (114) according to any one of the preceding claims, wherein the frame top (120) comprises at least one material selected from the group consisting of: a plastic material; a thermoplastic material; a Polypropylene (PP); a Polyamide (PA); a thermosetting material; an elastomer; a combination of one or more of the previously listed materials.

11. The battery cell fixture (114) according to any one of the preceding claims, wherein the coolant inlet (124) and the coolant outlet (126) are integrally formed by the frame base (116) and the frame top (120) and/or by conjunction of the frame top (120) and the frame base (116).

12. A method for manufacturing a battery cell fixture (114) according to any one of the preceding claims referring to a battery cell fixture (114), wherein the method comprises:
a) providing at least one frame base (116), wherein the frame base (116) comprises at least one thermoplastic material, such as Polypropylene (PP) and/or Polyamide (PA);
b) providing at least one frame top (120), wherein the frame top (120) comprises at least one thermoplastic material, such as Polypropylene (PP) and/or Polyamide (PA);
c) joining the frame top (120) onto the frame base (116) such that the fingers (118) of the frame base (116) are covered by the towers (122) of the frame top (120).

13. A battery module (110) comprising a plurality of battery cells (112) and at least one battery cell fixture (114) according to any one of the preceding claims referring to a battery cell fixture (114), wherein the plurality of battery cells (112) are supported by the at least one battery cell fixture (114) such that the battery cells (112) are arranged in a predefined relative position to each other within the at least one battery cell fixture (114).

14. A method for manufacturing at least one battery module (110) according to the preceding claim, wherein the method comprises
i) providing at least one battery cell fixture (114) according to any one of the preceding claims referring to a battery cell fixture (114);
ii) providing a plurality of battery cells (112);
iii) placing the battery cells (112) in the battery cell fixture (114) such that the battery cells (112) are arranged in a predefined relative position to each other within the at least one battery cell fixture (114).

15. The method according to the preceding claim, wherein in step i) a plurality of battery fixtures (114) are provided and wherein the method further comprises:
iv) connecting at least two battery fixtures (114) to each other by either clipping the battery fixtures (114) together by a clip joint (138) of the battery fixtures (114), or by welding the battery fixtures (114) together by performing one or more welding processes selected from the group consisting of: a hot plate welding; a laser welding; an ultrasound welding; a hot gas welding; a vibration welding; a glueing.
